# EUROPÄISCHE PATENTSCHRIFT

(11) **EP 1 741 535 B1**
(45) Veröffentlichungstag und Bekanntmachung des Hinweises auf die Patenterteilung: **18.03.2009**
(21) Anmeldenummer: 06013792.4
(22) Anmeldetag: 04.07.2006
(51) Int. Cl.: B29B 9/06, F16D 27/01

(54) **Kunststoff-Granuliervorrichtung**
Device for granulating a thermoplastic
Dispositif de granulation de matière thermoplastique

(30) Priorität: 04.07.2005 AT 11192005
(43) Veröffentlichungstag der Anmeldung: 10.01.2007
(73) Patentinhaber: STARLINGER & CO. GESELLSCHAFT MBH, 1060 Wien (AT)
(72) Erfinder: Brandstätter, Johann, 2564 Furth (AT); Pechhacker, Andreas, 2571 Altenmarkt-Thennenberg (AT)
(74) Vertreter: Margotti, Herwig Franz

(56) Entgegenhaltungen:
- EP-A- 0 992 328
- WO-A-20/05037511
- AT-B- 388 131
- DE-A1- 2 821 973
- DE-U1- 20 300 009

## Beschreibung

Die Erfindung betrifft eine Vorrichtung zum Granulieren von Kunststoffschmelzen, mit einem Granulierkopf, an den eine Lochplatte angeschlossen ist, die mit Schmelzeaustrittsöffnungen versehen ist, welche von rotierenden Messern überschliffen werden, die in einer drehbar gelagerten Messerhalterung angeordnet sind, wobei die Messerhalterung über eine Antriebswelle von einem Motor angetrieben wird, sowie mit einem die Lochplatte umschließenden Granuliergehäuse, welches mit zumindest einem Gehäuseeinlass versehen ist, durch den ein Kühl- und Transportmedium, vorzugsweise Wasser oder Luft, in das Innere des Granuliergehäuses zuführbar ist, wobei das Kühl- und Transportmedium entlang der Innenseite des Granuliergehäuses mit einer Bewegungskomponente vom Granulierkopf weg zu einem Gehäuseauslass strömt, der an dem dem Granulierkopf abgewandten Endbereich des Granuliergehäuses angeordnet ist und durch den das Kühl- und Transportmedium zusammen mit Granulatkörner abführbar ist.

Eine derartige Granuliervorrichtung ist aus dem Dokument AT-B-388 131 bekannt und dient dazu, aus einer heißen Kunststoffschmelze Granulatkörner herzustellen, die als Ausgangsmaterial für die Herstellung von Kunststoffteilen durch Extrusion etc. Verwendung finden. Bei einer solchen Granuliervorrichtung werden von den rotierenden Messern Granulatkörner von der aus den Schmelzeaustrittsöffnungen quellenden Kunststoffschmelze abgeschnitten, die durch die von den rotierenden Messern verliehenen Fliehkräfte nach außen gegen die Innenseite des Granuliergehäuses geschleudert werden, wo sie in den Strom des Kühl- und Transportmediums gelangen, dabei abgekühlt und anschließend aus dem Gehäuseauslass abgeführt werden. Um zu verhindern, dass die abgeschnittenen, noch warmen Granulatkörner deformiert werden, zusammenkleben und/oder an der Innenseite des Granuliergehäuses ankleben, ist eine möglichst rasche Abkühlung der Granulatkörner erforderlich, wozu das Kühl- und Transportmedium möglichst kalt sein muss. Dies führt wiederum dazu, dass innerhalb des Granuliergehäuses große Temperaturunterschiede herrschen, die in unterschiedlichen Wärmedehnungen der einzelnen Teile der Granuliervorrichtung resultieren, die wiederum zu Materialspannungen, erhöhter Lagerbelastungen der Messerhalterung und der Antriebswelle und schlussendlich zu verkürzter Lebensdauer der Granuliervorrichtung führen.

Aus der EP 0 992 328 A2 ist eine Granuliervorrichtung mit einer Lochplatte bekannt, durch deren Löcher jeweils ein Kunststoffstrang etwa axial in eine Fanghaube eintritt, wobei darin ein Messerkopf mit einer axialen Welle anliegend an der Ausgangsseite der Lochplatte rotiert und Messer des Messerkopfes den austretenden Kunststoffstrang abtrennen. Die axiale Welle ist von einem Elektromotor antreibbar und in zwei getrennte Wellenabschnitte unterteilt, wovon der erste Wellenabschnitt den Messerkopf trägt und der zweite Wellenabschnitt die hohlgebohrte Antriebswelle des Elektromotors ist. Die beiden Wellenabschnitte sind durch einen elastischen Faltenbalg zur Übertragung eines Drehmoments verbunden, wobei der Faltenbalg zur axialen Verschiebung des Messerkopfes durch eine Spreizvorrichtung spreizbar ist.

Aus dem Dokument DE 28 21 973 ist eine magnetische Drehmomentkupplung bekannt. Als Einsatzgebiet für diese Drehmomentkupplung werden Bandaufwickelspulen und Spannungssteuersysteme genannt.

Die Erfindung hat sich zur Aufgabe gestellt, eine Vorrichtung zum Granulieren von Kunststoffschmelzen der eingangs angeführten Gattung derart zu verbessern, dass die Materialspannungen und Lagerbelastungen der Messerhalterung und der Antriebswelle reduziert werden und darüber hinaus ein erleichterter Zusammenbau und einfacherer Austausch der Messer ermöglicht wird und allgemein die Wartbarkeit der Granuliervorrichtung verbessert wird.

Die Erfindung löst diese Aufgabe durch Bereitstellen einer Granuliervorrichtung mit den Merkmalen des Anspruchs 1. Vorteilhafte Ausgestaltungen der Erfindung sind in den Unteransprüchen dargelegt.

Die erfindungsgemäße Vorrichtung zum Granulieren von Kunststoffschmelzen umfasst einen Granulierkopf, an den eine Lochplatte angeschlossen ist, die mit Schmelzeaustrittsöffnungen versehen ist, welche von rotierenden Messern überschliffen werden. Die Lochplatte ist von einem Granuliergehäuse umschlossen, welches mit zumindest einem Gehäuseeinlass versehen ist, durch den ein Kühl- und Transportmedium, vorzugsweise Wasser oder Luft, in das Innere des Granuliergehäuses zuführbar ist, wobei das Kühl- und Transportmedium entlang der Innenseite des Granuliergehäuses mit einer Bewegungskomponente vom Granulierkopf weg zu einem Gehäuseauslass strömt, der an dem dem Granulierkopf abgewandten Endbereich des Granuliergehäuses angeordnet ist und durch den das Kühl- und Transportmedium zusammen mit Granulatkörnern abführbar ist. Die rotierenden Messer sind in einer drehbar gelagerten Messerhalterung angeordnet, die über eine Magnetkupplung an die Antriebswelle eines Motors gekoppelt ist und somit berührungslos angetrieben wird.

Der große Vorteil des erfindungsgemäßen berührungslosen Antriebs des Messerhalters über die Magnetkupplung liegt darin, dass aufgrund eines Abstandes zwischen den Kupplungselementen der Magnetkupplung ein Achsversatz oder eine von einem rechten Winkel abweichende Winkelstellung zwischen der Antriebsachse und der Lochplatte ohne Auswirkung auf den Lauf der Messer über die Schmelzeaustrittsöffnungen bleibt. Anders als bei Granuliervorrichtungen nach dem Stand der Technik sitzt das die Messerhalterung lagernde Drehlager in dem Granulierkopf und somit die Messerhalterung in definierter Lage zur Lochplatte. Die genannten Bauteile können noch vor ihrem Einbau in die Granuliervorrichtung als Baugruppe zusammengesetzt werden, wodurch enge Toleranzen eingehalten werden können. Dadurch ergibt sich ein hervorragender Messerlauf über die Lochplatte, der auch durch allfälligen Achsversatz oder Winkelversatz der Antriebswelle zur Lochplatte nicht negativ beeinflusst wird. Vielmehr werden solche Abweichungen vom Abstand zwischen den Kupplungselementen der Magnetkupplung aufgenommen. Die erfindungsgemäße Granuliervorrichtung lässt sich daher auch einfach zerlegen und wieder zusammensetzen, was die Wartbarkeit enorm erleichtert.

In einer kompakten und hochverlässlichen Ausführungsform der Erfindung umfasst die Magnetkupplung zwei Kupplungselemente, von denen eines drehfest mit der Antriebswelle und das andere drehfest mit der Messerhalterung verbunden ist, wobei die beiden Kupplungselemente in einem Abstand voneinander angeordnet sind und jeweils mehrere Permanentmagneten tragen, die so angeordnet sind, dass sie korrespondierenden Permanentmagneten des anderen Kupplungselements gegenüberstehen. Mit einer solchen Kupplung sind hohe Drehmomente übertragbar.

Die Kupplungselemente lassen sich bereits bei einer Teildrehung eines der Kupplungselemente in magnetische Anziehung bringen, wenn die Permanentmagneten entlang zumindest einer Kreislinie in den Kupplungselementen gelagert sind.

In einer sehr stabilen Ausführungsform der Erfindung sind die Permanentmagneten in Durchgangs- oder Sacklöchern der Kupplungselemente gelagert.

Es hat sich für den Verlauf des magnetischen Flusses als günstig erwiesen, wenn in jedem Kupplungselement benachbarte Permanentmagneten in umgekehrter Polarität eingebaut sind. Um die magnetischen Feldlinien nicht unerwünscht zu beeinflussen, ist es zweckmäßig, wenn die Kupplungselemente aus einem nicht magnetischen Material bestehen.

Hervorragende Drehmomentübertragung zwischen den beabstandeten Kupplungselementen erzielt man, wenn diese als Scheiben, Räder, in Topfform oder in Form mehrerer Flügel ausgebildet sind, wobei vorzugsweise die Permanentmagneten in Umfangsnähe angeordnet sind.

In einer sehr kompakten und stabilen Ausführungsform der erfindungsgemäßen Granuliervorrichtung ragt der Motor zumindest teilweise in einen zwischen der Messerhalterung und dem Gehäuseauslass definierten Bereich des Granuliergehäuses. Dadurch verkürzt sich die Baulänge der Antriebswelle erheblich, wodurch kaum Schwingungen, Durchbiegungen, Achsversatz oder Winkelversatz auftreten.

Die Erfindung wird nun anhand von nicht einschränkenden Ausführungsbeispielen unter Bezugnahme auf die Zeichnungen näher erläutert. In den Zeichnungen zeigen Fig. 1 eine erste Ausführungsform einer erfindungsgemäßen Granuliervorrichtung im Längsschnitt, Fig. 2 eine zweite Ausführungsform einer erfindungsgemäßen Granuliervorrichtung im Längsschnitt und Fig. 3 ein Kupplungselement in Draufsicht.

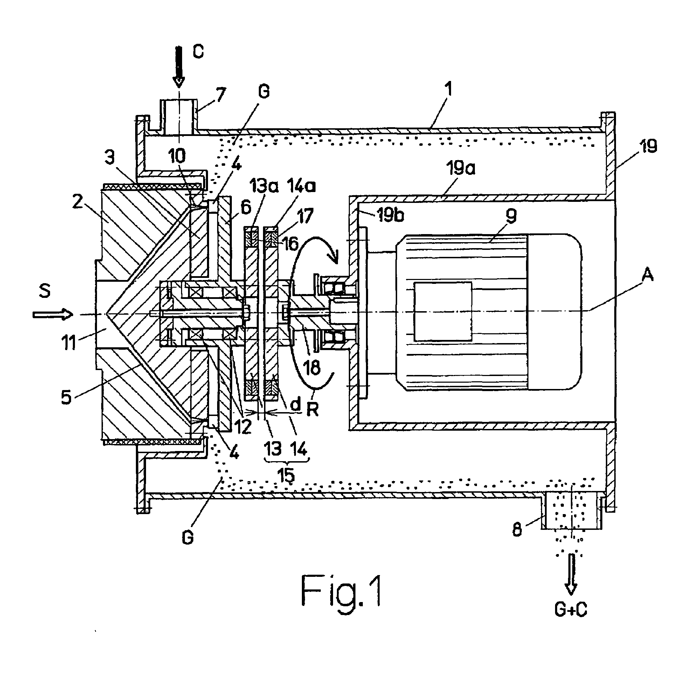

Zunächst auf Fig. 1 Bezug nehmend wird eine erste Ausführungsform einer erfindungsgemäßen Granuliervorrichtung erläutert. Diese weist einen Granulierkopf 2 auf, dem über eine Eintrittsöffnung 11 Kunststoffschmelze S zugeführt wird. Von der Eintrittsöffnung 11 verläuft ein kegelförmiger Schmelzeverteiler 5 radial nach außen, der den Granulierkopf 2 schräg durchsetzt und an der der Eintrittsöffnung 11 abgewandten Oberfläche des Granulierkopfs 2 ringförmig mündet. Auf die genannte Oberfläche des Granulierkopfs 2 ist eine Lochplatte 3 aufgeschraubt, die mit einer Vielzahl von Schmelzeaustrittsöffnungen 10 versehen ist, die mit der ringförmigen Mündung des Schmelzeverteilers 5 fluchten. Die Lochplatte 3 wird von einem hohlzylindrischen Granuliergehäuse 1 umschlossen. Die Kunststoffschmelze S wird unter Druck in die Eintrittsöffnung 11 eingebracht und von dort durch den Schmelzeverteiler 5 zu den Schmelzeaustrittsöffnungen 10 und durch diese hindurch in das Innere des Granuliergehäuses transportiert. Die Schmelzeaustrittsöffnungen 10 in der Lochplatte 3 werden von Messern 4 überschliffen, die in einer rotierenden Messerhalterung 6 fixiert sind, so dass die Messer 4 Granulatkörner G von der Kunststoffschmelze S abschneiden. Die Messerhalterung 6 ist in einem Drehlager 12 gelagert. Die Anzahl der Messer 4, ihre Rotationsgeschwindigkeit und die Anzahl sowie der Durchmesser der Schmelzeaustrittsöffnungen 10 bestimmen bei gegebener Kunststoffschmelzedurchsatzmenge die Form der Granulatkörner G. Den von den Messern 4 abgeschnittenen Granulatkörnern G wird durch die Rotationsbewegung der Messer 4 eine Fliehkraftkomponente verliehen, die sie von den Schmelzeaustrittsöffnungen 10 weg zur Innenseite des Granuliergehäuses 1 schleudert. Die Granulatkörner müssen nun gekühlt und aus dem Granuliergehäuse 1 über einen Gehäuseauslass 8 abgeführt werden. Dazu dient ein Kühl- und Transportmedium C, beispielsweise Wasser oder Luft, das durch einen Gehäuseeinlass 7 unter Druck in das Innere des Granuliergehäuses 1 eingespritzt wird. Das Kühl- und Transportmedium C wird in einem solchen Winkel in das Innere des Granuliergehäuses 1 eingespritzt, dass es sich mit einer Bewegungskomponente weg vom Granulierkopf 2 in Windungen entlang der Innenseite des Granuliergehäuses 1 hin zum Gehäuseauslass 8 bewegt, wo es zusammen mit den Granulatkörnern G abgeführt wird.

Erfindungsgemäß wird die Messerhalterung 6 berührungslos angetrieben, indem sie über eine Magnetkupplung 15 an die Antriebswelle 18 eines Elektromotors 9 gekoppelt ist. Die Magnetkupplung 15 umfasst zwei Kupplungselemente 13, 14, von denen ein Kupplungselement 14 drehfest mit der Antriebswelle 18 und das andere Kupplungselement 13 drehfest mit der Messerhalterung 6 verbunden ist, wobei die beiden Kupplungselemente 13, 14 in einem Abstand d voneinander angeordnet sind. Jedes Kupplungselement 13, 14 trägt in Durchgangslöcher 13a, 14a eingepasste oder eingeklebte Permanentmagneten 16, 17, die so angeordnet sind, dass die Permanentmagneten 16 des einen Kupplungselements 13 den Permanentmagneten 17 des anderen Kupplungselements 14 gegenüberstehen bzw. miteinander koaxial ausgerichtet sind, so dass sich eine optimale magnetische Anziehung einstellt. Es sei erwähnt, dass die Durchgangslöcher 13a, 14a auch als Sacklöcher ausgebildet sein können. Die Permanentmagneten 16, 17 sind in regelmäßigen Abständen, vorzugsweise entlang einer Kreislinie, in ihren Kupplungselementen angeordnet. Zur Erzielung eines hohen Drehmoments ist es zweckmäßig, wenn die Permanentmagneten in der Nähe des Umfangs der Kupplungselemente angeordnet sind. Die Permanentmagneten 16, 17 bestehen aus hochmagnetischem und den Betriebstemperaturen der Granuliervorrichtung standhaltendem magnetischen Material. Die Permanentmagneten sind als zylindrische Stabmagneten ausgeführt, wobei benachbarte Magneten mit umgekehrter Polarität in die Kupplungselemente 13, 14 eingesetzt sind. Im ausgerichteten Zustand der Kupplungselemente 13, 14 sind korrespondierende Permanentmagneten 16, 17 koaxial angeordnet. Die Kupplungselemente 13, 14 bestehen aus im Wesentlichen nichtmagnetischem Material, wie z.B. einer Aluminiumlegierung. Wenn der Motor 9 in Betrieb gesetzt wird dreht seine Antriebswelle 18 das angeschlossene Kupplungselement 14 in Richtung des Pfeils R. Sobald die Permanentmagneten 17 des Kupplungselements 14 mit den Permanentmagneten 16 des anderen Kupplungselements 13 in magnetische Anziehung gelangt sind, ziehen sie die Permanentmagneten 16 mit und versetzen dadurch das Kupplungselement 13 in Drehung, das wiederum die Messerhalterung 6 dreht.

Die Antriebswelle 18, die Kupplungselemente 13, 14 und die Messerhalterung 6 sind im Wesentlichen koaxial in einer Achse A montiert. Der große Vorteil des erfindungsgemäßen berührungslosen Antriebs des Messerhalters 6 mittels der Magnetkupplung 15 liegt darin, dass aufgrund des Abstandes d zwischen den Kupplungselementen 13, 14 der Magnetkupplung 15 ein Achsversatz oder eine von einem rechten Winkel abweichende Winkelstellung zwischen der Antriebsachse 18 bzw. dem damit verbundenen Kupplungselement 14 und der Lochplatte 3 ohne Auswirkung auf den Lauf der Messer 4 über die Schmelzeaustrittsöffnungen 10 bleibt. Anders als bei Granuliervorrichtungen nach dem Stand der Technik können die Lochplatte 3, das Drehlager 12 und die Messerhalterung 6 noch vor ihrem Einbau in die Granuliervorrichtung als Baugruppe zusammengesetzt werden, wodurch enge Toleranzen eingehalten werden können. Dadurch ergibt sich ein hervorragender Messerlauf über die Lochplatte 3, der sich durch entsprechende Auslegung der genannten Teile der Baugruppe auch unter erhöhten Betriebstemperaturen aufrecht erhalten lässt. Da diese Baugruppe sehr kompakt ausgeführt werden kann, bestehen auch keine durch Wärmespannungen verursachten Probleme, da die temperaturbedingten Materialdehnungen aufgrund der kurzen Bauweise sehr gering sind.

Wärmespannungsprobleme oder Materialdehnungsprobleme könnten am ehesten an der Antriebswelle 18 entstehen, doch dient hier der Abstand d zwischen den Kupplungselementen 13, 14, der im Allgemeinen einige Millimeter beträgt, dazu, allfällige Dehnungen, Durchbiegungen, Axialversatz oder Winkelversatz der Antriebswelle im laufenden Betrieb aufzunehmen. Es sei weiters erwähnt, dass der erfindungsgemäße berührungslose Antrieb des Messerhalters 6 auch die Wartbarkeit der Granuliervorrichtung wesentlich verbessert, da sie sich einfach zerlegen und wieder zusammensetzen lässt. Es ist in der Praxis unerlässlich, die Granuliervorrichtung in regelmäßigen Intervallen zu öffnen, um die Messer 4 auszutauschen oder zu schleifen. Während der Zusammenbau bei Granuliervorrichtungen nach dem Stand der Technik das Wartungspersonal immer vor große Herausforderungen stellt, da sehr enge Toleranzen bei der Verbindung der Antriebswelle mit der Messerhalterung einzuhalten sind, werden bei der vorliegenden Granuliervorrichtungen allfällige Abweichungen von der Magnetkupplung 15 aufgenommen, so dass der Zusammenbau unkritisch ist.

Wie erwähnt, treten Probleme in Bezug auf Wärmedehnungen am ehesten bei der Antriebswelle 18 auf, die den Innenraum des Granuliergehäuses 1 durchsetzt und bei Vorrichtungen nach dem Stand der Technik ein sehr langes Bauelement darstellt. Die vorliegende Ausführungsform der erfindungsgemäßen Granuliervorrichtung bietet eine weitere Besonderheit, die zu einer extrem kurzen Bauform der Antriebswelle 18 führt. Bei dieser Ausführungsform ist das Granuliergehäuse 1 durch einen Deckel 19 verschlossen, der zentral eine Vertiefung 19a aufweist, die tief in den Innenraum des Granuliergehäuses 1 ragt. Dies führt zu keiner Beeinträchtigung des Granulierbetriebs, da die Granuliervorrichtung als Luft- oder Wasserringgranuliervorrichtung ausgebildet ist, bei der der Transport und die Kühlung der Granulatkörner schraubenlinienförmig an der Innenseite des Granuliergehäuses verläuft. In die Vertiefung 19a ist der Motor 9 zur Gänze aufgenommen, indem er an der Basisfläche 19b der Vertiefung 19a angeschraubt ist. Die Vertiefung 19 weist eine solche Tiefe auf, dass der Motor 9 nicht über das Granuliergehäuse 1 hinausragt. Da der Motor 9 weit in das Innere des Granuliergehäuses 1 gesetzt ist, ergibt sich für die Antriebswelle 18 eine extrem kurze Baulänge.

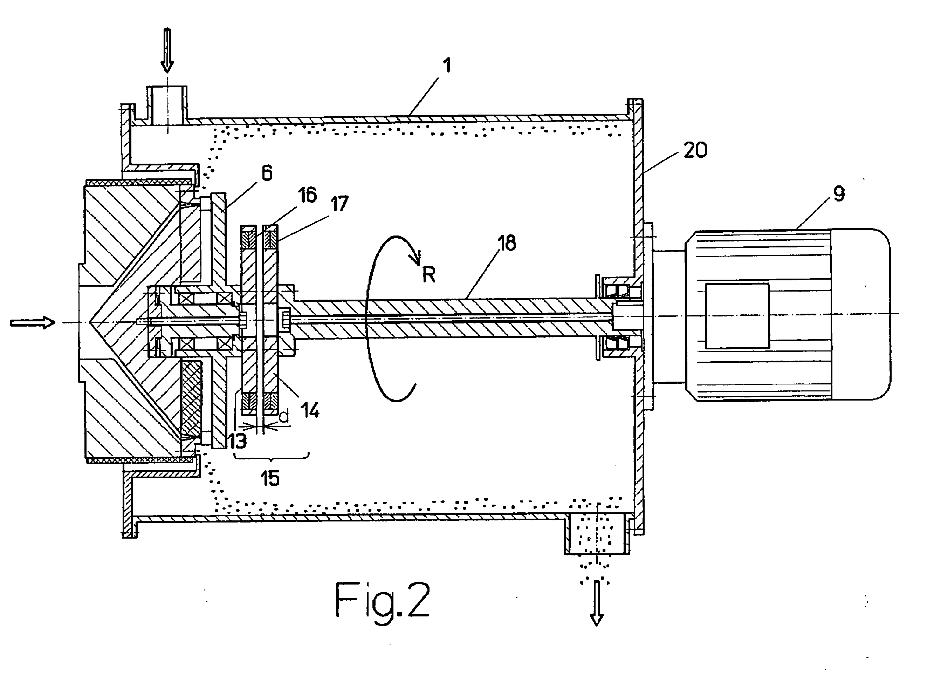

In Fig. 2 ist eine weitere Ausführungsform einer erfindungsgemäßen Granuliervorrichtung im Längsschnitt dargestellt. Diese unterscheidet sich von der ersten Ausführungsform nur insoweit, als der das Granuliergehäuse 1 verschließende Deckel 20 als ebene Platte ausgeführt ist, die am Granuliergehäuse 1 angeflanscht ist. Der Motor 9 sitzt an der Außenseite des Deckels 20. Wie aus der Zeichnung ersichtlich, führt diese Bauweise zu einer wesentlich längeren Antriebsachse 18' als in der ersten Ausführungsform, die natürlich eher zu Achsversatz, Winkelversatz oder zu Schwingungen bei Rotation R neigt. Aber auch dies kann durch den Abstand d zwischen den Kupplungselementen 13, 14 ausgeglichen werden, ohne dass die magnetische Anziehung zwischen den Permanentmagneten 16, 17 sich merklich verschlechtert, so dass auch bei dieser Ausführungsform die Messerhalterung 6 über die Magnetkupplung 15 optimal berührungslos von der Antriebswelle 18' gedreht wird.

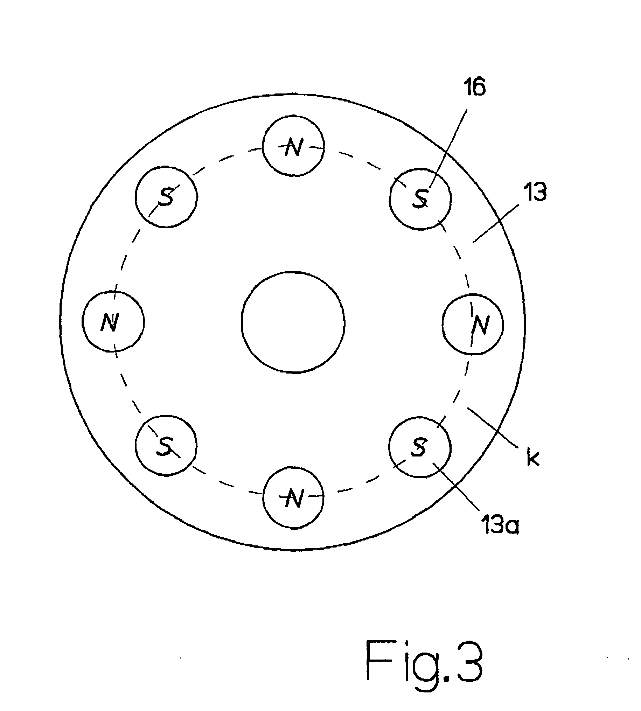

Fig. 3 zeigt ein in der erfindungsgemäßen Granuliervorrichtung zum Einsatz kommendes Kupplungselement 13 in Draufsicht. Die Permanentmagneten 16, die als zylindrische Stabmagneten ausgeführt sind, sind in Durchgangslöcher 13 des Kupplungselements eingesetzt, so dass ihre Längsachse, die der magnetischen Achse zwischen Nord- und Südpol entspricht, aus der Zeichnungsebene herausragt. Die Anordnung der Permanentmagneten 16 ist solcherart, dass benachbarte Permanentmagneten jeweils in umgekehrter Polarität in das Kupplungselement eingesetzt sind (verdeutlicht durch die Bezugszeichen N und S für Nordpol bzw. Südpol). Weiters sind alle Permanentmagneten entlang einer Kreislinie k in Umfangsnähe des Kupplungselements angeordnet. Es sei erwähnt, dass auch das andere Kupplungselement 17 gleichartig ausgeführt ist. Weiters sei erwähnt, dass die Form der Kupplungselemente 13, 14 nicht auf Scheiben beschränkt ist. Andere günstige Ausführungsformen umfassen ein Speichenrad, wobei die Permanentmagneten zweckmäßig im Radring angeordnet sind, oder eine Vielzahl an Flügeln bzw. Armen, die sich von einer zentralen Nabe radial nach außen erstrecken, wobei die Permanentmagneten nahe den freien Enden der Flügel angeordnet sind.

## Patentansprüche

1. Vorrichtung zum Granulieren von Kunststoffschmelzen, mit einem Granulierkopf (2), an den eine Lochplatte (3) angeschlossen ist, die mit Schmelzeaustrittsöffnungen (10) versehen ist, welche von rotierenden Messern (4) überschliffen werden, die in einer drehbar gelagerten Messerhalterung (6) angeordnet sind, wobei die Messerhalterung (6) über eine Antriebswelle (18, 18') von einem Motor (9) angetrieben wird, sowie mit einem die Lochplatte (3) umschließenden Granuliergehäuse (1), welches mit zumindest einem Gehäuseeinlass (7) versehen ist, durch den ein Kühl- und Transportmedium (C), vorzugsweise Wasser oder Luft, in das Innere des Granuliergehäuses (1) zuführbar ist, wobei das Kühl- und Transportmedium (C) entlang der Innenseite des Granuliergehäuses (1) mit einer Bewegungskomponente vom Granulierkopf (2) weg zu einem Gehäuseauslass (8) strömt, der an dem dem Granulierkopf (2) abgewandten Endbereich des Granuliergehäuses (1) angeordnet ist und durch den das Kühl- und Transportmedium (C) zusammen mit Granulatkörnern (G) abführbar ist, **dadurch gekennzeichnet, dass** die Messerhalterung (6) über eine Magnetkupplung (15) an die Antriebswelle (18, 18') gekoppelt ist.

2. Granuliervorrichtung nach Anspruch 1, **dadurch gekennzeichnet, dass** die Magnetkupplung (15) zwei Kupplungselemente (13, 14) umfasst, von denen eines (14) drehfest mit der Antriebswelle (18, 18') und das andere (13) drehfest mit der Messerhalterung (6) verbunden ist, wobei die beiden Kupplungselemente (13, 14) in einem Abstand (d) voneinander angeordnet sind und jeweils mehrere Permanentmagneten (16, 17) tragen, die so angeordnet sind, dass sie mit Permanentmagneten (17, 16) des anderen Kupplungselements (14, ,13) in magnetische Anziehung bringbar sind.

3. Granuliervorrichtung nach Anspruch 2, **dadurch gekennzeichnet, dass** die Permanentmagneten (16, 17) entlang zumindest einer Kreislinie in den Kupplungselementen (13,14) gelagert sind.

4. Granuliervorrichtung nach Anspruch 2 oder 3, **dadurch gekennzeichnet, dass** die Permanentmagneten (16, 17) in Durchgangs- (13a, 14a) oder Sacklöchern der Kupplungselemente (13, 14) gelagert sind.

5. Granuliervorrichrung nach einem der Ansprüche 2 bis 4, **dadurch gekennzeichnet, dass** in den Kupplungselementen (13, 14) benachbarte Permanentmagneten in umgekehrter Polarität eingebaut sind.

6. Granuliervorrichtung-nach einem der Ansprüche 2 bis 5, **dadurch gekennzeichnet, dass** die Kupplungselememe (13, 14) aus einem nicht magnetischen Material bestehen.

7. Granuliervorrichtung nach einem der Ansprüche 2 bis 6, **dadurch gekennzeichnet, dass** die Kupplungselemente (13, 14) Scheiben, Räder oder eine Vielzahl an Flügeln umfassen, oder in Topfform ausgebildet sind, wobei vorzugsweise die Permanentmagneten in Umfangsnähe angeordnet sind.

8. Granuliervorrichtung nach einem der vorhergehenden Ansprüche, **dadurch gekennzeichnet, dass** der Motor (9) zumindest teilweise in einen zwischen der Messerhalterung (6) und dem Gehäuseauslass (8) definierten Bereich des Granuliergehäuses (1) ragt.

## Claims

1. A device for granulating plastic melts, comprising a granulating head (2) to which a perforated plate (3) provided with melt-discharge openings (10) is attached, which openings are swept by rotating knives (4) arranged in a knife holding device (6) mounted in a rotatable manner, with the knife holding device (6) being driven by a motor (9) via a drive shaft (18, 18'), as well as comprising a granulating housing (1) enclosing the perforated plate (3), which housing is provided with at least one housing inlet (7) through which a cooling and transport medium (C), preferably water or air, can be supplied to the interior of the granulating housing (1), the cooling and transport medium (C) flowing with a motion component along the inner wall of the granulating housing (1) from the granulating head (2) toward a housing outlet (8) which is arranged in the end region of the granulating housing (1) opposite to the granulating head (2) and through which the cooling and transport medium (C) can be discharged along with granules (G), **characterized in that** the knife holding device (6) is coupled to the drive shaft (18, 18') via a magnetic clutch (15).

2. A granulating device according to claim 1, **characterized in that** the magnetic clutch (15) comprises two coupling elements (13, 14), one of them (14) being connected to the drive shaft (18, 18') in a torque proof manner and the other one (13) being connected to the knife holding device (6) in a torque proof manner, wherein the two coupling elements (13, 14) are arranged at a distance (d) from each other and each carry several permanent magnets (16, 17) which are arranged such that they can be brought into a magnetic attraction with permanent magnets (17, 16) of the other coupling element (14, 13).

3. A granulating device according to claim 2, **characterized in that** the permanent magnets (16, 17) are arranged in the coupling elements (13, 14) along at least one circular line.

4. A granulating device according to claim 2 or 3, **characterized in that** the permanent magnets (16, 17) are arranged in through holes (13a, 14a) or blind holes of the coupling elements (13, 14).

5. A granulating device according to any of claims 2 to 4, **characterized in that** adjacent permanent magnets with reversed polarity are installed in the coupling elements (13, 14).

6. A granulating device according to any of claims 2 to 5, **characterized in that** the coupling elements (13, 14) are made of a nonmagnetic material.

7. A granulating device according to any of claims 2 to 6, **characterized in that** the coupling elements (13, 14) comprise disks, wheels or a plurality of wings or are designed in the form of pots, with the permanent magnets preferably being arranged close to the circumference.

8. A granulating device according to any of the preceding claims, **characterized in that** the motor (9) projects at least partially into an area of the granulating housing (1) which is defined between the knife holding device (6) and the housing outlet (8).

## Revendications

1. Dispositif de granulation de masses fondues de matière synthétique, avec un pot de granulation (2), auquel est raccordé une plaque perforée (3), munie d'ouvertures de sortie de masse fondue (10), raclées par des lames (4) rotatives passant dessus, disposées dans une fixation de lames (6) montée à rotation, la fixation de lames (6) étant entraînée par un moteur (9), par l'intermédiaire d'un arbre d'entraînement (18, 18'), ainsi qu'avec un boîtier de granulation (1), entourant la plaque perforée (3) et muni d'au moins une admission de boîtier (7), au moyen de laquelle peut être amené à l'intérieur du boîtier de granulation (1) un fluide de refroidissement et de transport (C), de préférence de l'eau ou de l'air, le fluide de refroidissement et de transport (C) s'écoulant le long de la face intérieure du boîtier de granulation (1) avec une composante cinématique provenant de la tête de granulation (2), en s'échappant vers une évacuation de boîtier (8), disposée sur la zone d'extrémité, opposée à la tête de granulation (2), du boîtier de granulation (1) et à travers laquelle le fluide de refroidissement et de transport (C) est susceptible d'être évacué, conjointement avec des grains de granulat (G), **caractérisé en ce que** la fixation de lames (6) est couplée à l'arbre d'entraînement (18, 18') par l'intermédiaire d'un accouplement magnétique (15).

2. Dispositif de granulation selon la revendication 1, **caractérisé en ce que** l'accouplement magnétique (15) comprend deux éléments d'accouplement (13, 14), dont l'un (14) est relié, de façon assujettie à rotation, à l'arbre d'entraînement (18, 18') et l'autre (13) est relié, de façon assujettie à rotation, à la fixation de lames (6), les deux éléments d'accouplement (13, 14) étant disposés à une distance (d) l'un de l'autre et portant chacun plusieurs aimants permanents (16, 17), disposés de manière qu'ils puissent être mis en attraction magnétique avec des aimants permanents (17, 16) de l'autre élément d'accouplement (14, 13).

3. Dispositif de granulation selon la revendication 2, **caractérisé en ce que** les aimants permanents (16, 17) sont montés le long d'au moins un cercle dans les éléments d'accouplement (13, 14).

4. Dispositif de granulation selon la revendication 2 ou 3, **caractérisé en ce que** les aimants permanents (16, 17) sont montés dans des trous de passage (13a, 14a) ou des trous borgnes des éléments d'accouplement (13, 14).

5. Dispositif de granulation selon l'une des revendications 2 à 4, **caractérisé en ce que** des aimants permanents voisins sont incorporés, selon une polarité inversée, dans les éléments d'accouplement (13, 14).

6. Dispositif de granulation selon l'une des revendications 2 à 5, **caractérisé en ce que** les éléments d'accouplement (13, 14) sont composés d'un matériau non magnétique.

7. Dispositif de granulation selon l'une des revendications 2 à 6, **caractérisé en ce que** les éléments d'accouplement (13, 14) comprennent des disques, des roues ou une pluralité d'ailettes, ou sont réalisés en forme de pot, de préférence les aimants permanents étant disposés à proximité de la périphérie.

8. Dispositif selon l'une des revendications précédentes, **caractérisé en ce que** le moteur (9) pénètre au moins partiellement dans une zone, définie entre la fixation de lames (6) et l'évacuation de boîtier (8), du boîtier de granulation (1).
